# EUROPEAN PATENT APPLICATION

(11) **EP 3 561 286 A1**
(43) Date of publication of application: **30.10.2019**
(21) Application number: 18169505.7
(22) Date of filing: 26.04.2018
(51) Int. Cl.: F02M 35/10, F02M 35/104, F02M 25/022, F02M 25/028, F02B 47/02

(54) **INTAKE MANIFOLD WITH INTEGRATED WATER INJECTION NOZZLE**

(71) Applicant: Volvo Car Corporation, 40531 Göteborg (SE)
(72) Inventor: Svensson, Mattias, 42372 SÄVE (SE)
(74) Representative: Kransell & Wennborg KB

(57) **Abstract**

Intake manifold for an internal combustion engine, comprising a at least one air intake opening connected to an inner chamber, and a plurality of outlet pipes connected to the inner chamber, where each outlet pipe is provided with an outlet opening adapted for a sealed connection with a cylinder head of an internal combustion engine, where the intake manifold is injection moulded in a plastic material, where the intake manifold comprises at least one water injection nozzle moulded into the intake manifold. The advantage of the invention is that a cost-efficient water injection system for a combustion engine is provided.

## Description

### TECHNICAL FIELD

The present invention relates to an intake manifold for an internal combustion engine, where the intake manifold comprises a water injection nozzle that is moulded into the intake manifold.

### BACKGROUND ART

In vehicles using a spark-ignited internal combustion engines running on e.g. gasoline, it is known to inject water into the inlet air for the cylinders. The water may be injected in order to replace fuel enrichment, reduce knock, and/or to lower the intake air temperature. The injected water may be used to reduce harmful emissions and/or to increase power output of the combustion engine. The water may be injected at the air inlet to the intake manifold by a single water injection nozzle, such that the injected water is part of the inlet air to the combustion engine, or the water may be injected close to the inlet valve of each cylinder by separate water injection nozzles, with one water injection nozzle arranged close to each inlet valve.

The water is normally injected through a water injection nozzle arranged in the intake manifold of the vehicle, where the water injection nozzle is mounted in a through hole in the wall of the intake manifold, such that the outlet opening of the water injection nozzle is positioned in an air channel of the intake manifold. The water is supplied from a water tank and is forwarded to the water injection nozzle by a pressure pump, which supplies the water injection nozzle with pressurized water. The water injection nozzle is normally provided with an opening and closing mechanism, e.g. an electromagnetic valve, which is opened when water is to be injected.

One or more water injection nozzles are mounted to the intake manifold through holes in the intake manifold wall. The water to the water injection nozzles is supplied through water tubes from the pressure pump. Such a solution requires several components and space in the engine compartment, and may be time consuming to mount. There is thus room for improvements.

### DISCLOSURE OF INVENTION

An object of the invention is therefore to provide an improved intake manifold comprising a water injection nozzle moulded into the intake manifold. A further object of the invention is to provide an internal combustion engine comprising such an intake manifold. A further object of the invention is to provide a vehicle comprising such an intake manifold.

The solution to the problem according to the invention is described in the characterizing part of claim 1 regarding the intake manifold, in claim 10 regarding the internal combustion engine and in claim 11 regarding the vehicle. The other claims contain advantageous further developments of the inventive intake manifold.

In an intake manifold for an internal combustion engine, comprising a at least one air intake opening connected to an inner chamber and comprising a plurality of outlet pipes connected to the inner chamber, where each outlet pipe is provided with an outlet opening adapted for a sealed connection with a cylinder head of an internal combustion engine, where the intake manifold is injection moulded in a plastic material, the object of the invention is achieved in that the intake manifold comprises at least one water injection nozzle moulded into the intake manifold.

By this first embodiment of an intake manifold according to the invention, an intake manifold comprising an embedded water injection nozzle moulded into the intake manifold is provided. The intake manifold-embedded water injection nozzle allows for an easy and cost-efficient installation of a water injection system for a combustion engine. The water injection nozzle can in this way be positioned in a predefined position, and it is further possible to use a non-symmetric water injection nozzle which can be positioned in a desired spray direction without the risk of misalignment during manual assembly.

The intake manifold further preferably comprises an integrated first water conduit leading water to the water injection nozzle. The water conduit is preferably integrated in a wall of the intake manifold. The intake manifold may further comprise an embedded water injection valve interface adapted to hold a water injection valve. The water injection valve interface is preferably also moulded into the intake manifold during the injection moulding process, and may then be positioned in the predefined and desired position prior to initiating the moulding process. The water injection valve is mounted in the water injection valve interface e.g. by a thread or by a holding means. The intake manifold may further comprise a second water conduit integrated in the intake manifold which connects the water injection valve to a water pump supplying the water injection nozzle with pressurized water.

### BRIEF DESCRIPTION OF DRAWINGS

The invention will be described in greater detail in the following, with reference to the attached drawings, in which
- Fig. 1: shows a first example of an intake manifold according to the invention,
- Fig. 2: shows a second example of an intake manifold according to the invention,
- Fig. 3: shows a third example of an intake manifold according to the invention,
- Fig. 4: shows a cut view of an intake manifold according to the invention, and
- Fig. 5: shows a vehicle comprising an intake manifold according to the invention.

### MODES FOR CARRYING OUT THE INVENTION

The embodiments of the invention with further developments described in the following are to be regarded only as examples and are in no way to limit the scope of the protection provided by the patent claims.

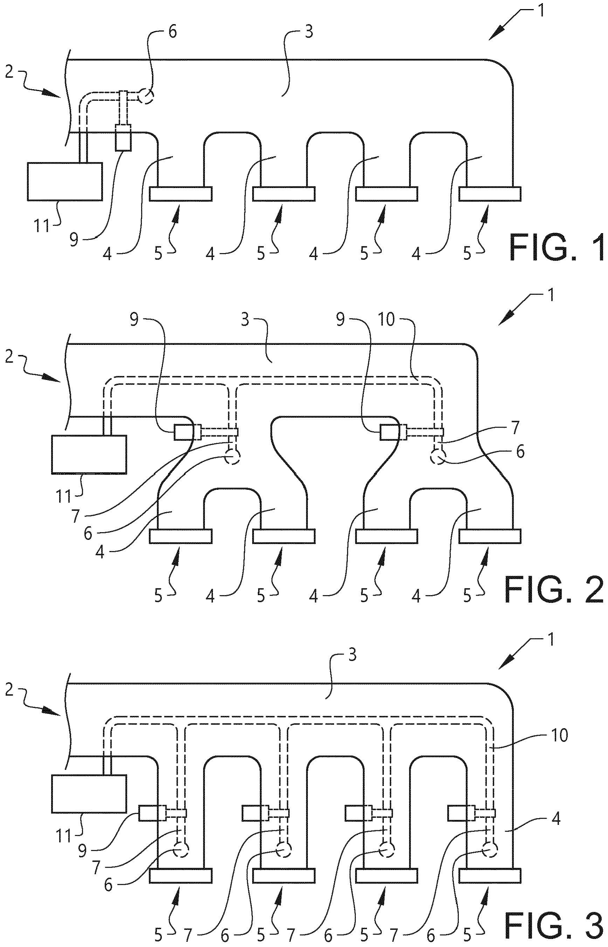

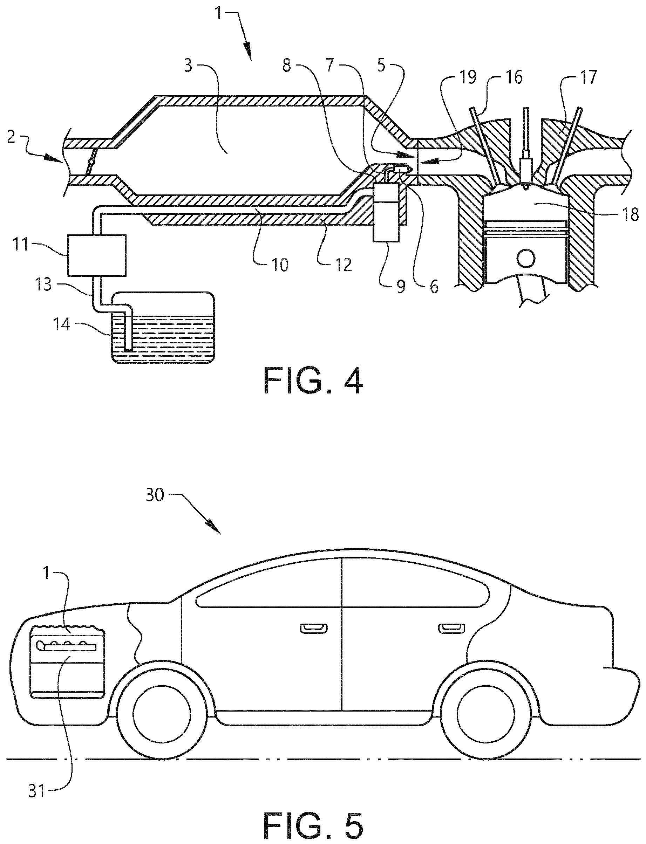

Figures 1 to 4 show examples of an intake manifold 1 which comprises at least one embedded water injection nozzle. Figure 5 shows a vehicle comprising an intake manifold.

The intake manifold 1 is adapted to receive and distribute the intake air from the air filter to the combustion engine. The intake manifold may also comprise other components, such as an air cooler or an exhaust gas recirculation system. In some engines, one or more fuel injectors are also comprised in the intake manifold. The intake manifold 1 comprises for this reason an air intake opening 2 which is connected to e.g. an air filter by an air conduit. The air intake opening 2 leads to an inner chamber 3 of the intake manifold, which often resembles a larger tube extending over at least part of the length of the combustion engine, especially for a straight combustion engine. The inner chamber ends in a plurality of outlet pipes 4 which are adapted to lead the air from the inner chamber to the inlet ports of the combustion engine. In a four cylinder combustion engine, the inner chamber may end in either two intermediate outlet pipes (as shown in Fig. 2), where each intermediate outlet pipe will end in two separate outlet pipes, or may end directly in four separate outlet pipes (as shown in Fig. 1). Each outlet pipe ends in an outlet opening 5 which is adapted to be connected to an inlet port of a cylinder head, close to the inlet valve of the cylinder.

The intake manifold is produced from a plastic material. In modern vehicles, an intake manifold is often produced by injection moulding a plastic material. The plastic material is preferably a composite plastic material comprising reinforcement fibres. Injection moulding will allow for an easy and reliable forming of the various chambers and pipes of the intake manifold. The intake manifold may be produced as a single part or may be assembled from several parts.

In the shown intake manifold, one or more water injection nozzles 6 are embedded in the plastic material of the intake manifold. The water injection nozzle is positioned in the mould prior to moulding, and is embedded into a wall of the intake manifold during the injection moulding of the intake manifold. In this way, the water injection nozzle is mounted in a secure and gas tight manner with a proper alignment and spray direction. The intake manifold will further comprise a first water conduit 7 which ends at the water injection nozzle. The first water conduit 7 is adapted to supply the water injection nozzle with pressurized water and is connected to a water pump. The water pump will be able to deliver a suitable pressure, e.g. in the range of 10 - 14 bars. The first water conduit 7 is also integrated in the intake manifold and is created in the injection moulding process.

Fig. 1 shows an example of an intake manifold 1 comprising a single water injection nozzle 6. Here, the water injection nozzle is positioned close to the air intake opening 2 such that the water spray will be able to mix in the inner chamber before the air/water spray mixture is forwarded to the four separate outlet pipes 4.

Fig. 2 shows an example of an intake manifold 1 comprising two intermediate outlet pipes, where each intermediate outlet pipe comprises a water injection nozzle 6. Each intermediate outlet pipe bifurcate into two separate outlet pipes 4. The injected water will mix with the air in the intermediate outlet pipe before the air/water spray mixture enters the two outlet pipes.

Fig. 3 shows an example of an intake manifold 1 where the inner chamber ends in four separate outlet pipes. Each outlet pipe 4 is provided with a water injection nozzle 6. Here, a water injection nozzle is positioned close to the outlet opening 5 of each outlet pipe, close to the intake valve of the combustion engine.

The number and position of water injection nozzles in the intake manifold is adapted to the various requirements and specifications of the combustion engine. Some combustion engines use water injection for enhancing the power output of the combustion engine, and in this case, the water injection can be positioned further away from the air intake of the combustion engine to reduce intake air temperature before entering the combustion chamber. In this way, the injected water is used to reduce the temperature of the intake air before entering the combustion chamber and the water injection nozzle can be arranged closer to the air intake of the intake manifold. Some combustion engines use water injection to improve fuel efficiency by replacing fuel enrichment and/or to reduce knock. In this case, the water injection may be performed closer to the air intake of the combustion engine, and the water injection nozzles may be positioned closer to the air intake of the combustion engine, close to the intake valves.

Fig. 4 shows a cut view of an intake manifold 1. The outlet opening 5 of the outlet pipe 4 is connected to an inlet port 19 of a cylinder head 17 of a combustion engine. The water injection nozzle 6 is here embedded in the wall of the outlet pipe 4, close to the outlet opening 5. This allows for water injection into the combustion chamber 18 when the intake valve 16 is open. The water injection nozzle 6 is connected to a water injection valve interface 8 through a first water conduit 7. The water injection valve interface 8 is also embedded in the wall of the outlet pipe, and may e.g. comprise a threaded member. In the water injection valve interface 8, an injection valve 9 is mounted. The injection valve 9 is preferably an electrically controlled injection valve. The injection valve will open or close the first water conduit 7 in order to inject water into the air intake of the combustion engine. The injection valve 9 is preferably arranged relatively close to the water injection nozzle 6.

A second water conduit 10 connects the injection valve to a water pump 11. The second water conduit is preferably also integrated in the body of the intake manifold, e.g. in a wall of the intake manifold. An interface for the water pump may also be embedded in the body of the intake manifold. Since only one water pump is required, the water pump may well be arranged outside of the intake manifold. In an intake manifold comprising more than one water injection nozzle, the second water conduit may branch of such that one water conduit leads to each injection valve. By integrating all water conduits in the intake manifold body together with the water injection nozzles and interfaces for the injection valves, a cost-efficient solution which requires fewer parts than conventional solutions is obtained.

The intake manifold is in the shown example provided with an embedded injection valve interface 8 adapted to hold a water injection valve 9. The water injection valve is preferably an on/off valve, e.g. an electromechanical solenoid valve adapted to open and close the water conduit 7 to the water injection nozzle 6. The injection valve interface 8 is adapted to the injection valve 9 that is to be used. The injection valve interface may e.g. comprise a water inlet and a water outlet which both connect to the valve, where the injection valve uses a built-in valve seat for opening and closing the water supply to the water injection nozzle. The interface may also comprise a valve seat against which the injection valve opens and closes the water supply to the water injection nozzle. The interface may be formed solely in the plastic material of the intake manifold or may comprise a metallic insert, e.g. a threaded part, adapted for the mounting of the injection valve.

The intake manifold comprises in the shown example a second water conduit 10 adapted to supply water from a water pump 11. It would be possible to embed an interface for the water pump in the intake manifold. The water pump supplies the water injection nozzles with pressurized water through the injection valve. By integrating the second water conduit in the intake manifold, only one water connection must be made, from the water pump to the water inlet to the intake manifold. By integrating the second water conduit leading from the water pump to the injection valves, the assembly of the water injection system is simplified since fewer components are used and since fewer connections must be made. Further, the space requirement for the water injection system in the engine compartment is reduced.

The water pump draws water for the water injection system from a water tank 14. The water pump may be arranged in the water tank or may be arranged outside of the water tank.

Fig. 5 shows a vehicle 30 comprising an internal combustion engine 31 comprising an intake manifold 1 according to the invention. The internal combustion engine is a spark-ignited gasoline engine which may be charged with a turbo or a supercharger.

The invention is not to be regarded as being limited to the embodiments described above, a number of additional variants and modifications being possible within the scope of the subsequent patent claims.

### REFERENCE SIGNS

- 1:: Intake manifold
- 2:: Air intake opening
- 3:: Inner chamber
- 4:: Outlet pipe
- 5:: Outlet opening
- 6:: Water injection nozzle
- 7:: First water conduit
- 8:: Water injection valve interface
- 9:: Injection valve
- 10:: Second water conduit
- 11:: Water pump
- 12:: Outlet pipe wall
- 13:: Third water conduit
- 14:: Water tank
- 15:: Body
- 16:: Intake valve
- 17:: Cylinder head
- 18:: Combustion chamber
- 19:: Inlet port
- 30:: Vehicle
- 31:: Internal combustion engine

## Claims

1. Intake manifold (1) for an internal combustion engine, comprising at least one air intake opening (2) connected to an inner chamber (3), and comprising a plurality of outlet pipes (4) connected to the inner chamber (3), where each outlet pipe (4) is provided with an outlet opening (5) adapted for a sealed connection with a cylinder head of an internal combustion engine, where the intake manifold (1) is injection moulded in a plastic material, **characterized in that** the intake manifold (1) comprises at least one water injection nozzle (6) moulded into the intake manifold (1).

2. Intake manifold according to claim 1, **characterized in that** the water injection nozzle (6) is made from a metal.

3. Intake manifold according to claim 1 or 2, **characterized in that** the intake manifold (1) further comprises a first water conduit (7) integrated in the body (15) of the intake manifold (1), where the first water conduit (7) is connected to the water injection nozzle (6).

4. Intake manifold according to any of claims 1 to 3, **characterized in that** the intake manifold (1) comprises a single water injection nozzle (6) arranged in the inner chamber (3).

5. Intake manifold according to any of claims 1 to 3, **characterized in that** each outlet pipe (4) comprises a water injection nozzle (6).

6. Intake manifold according to any of the preceding claims, **characterized in that** the intake manifold further comprises at least one water injection valve interface (8) adapted to hold a water injection valve (9).

7. Intake manifold according to any of claims 3 to 6, **characterized in that** the intake manifold further comprises a second water conduit (10) integrated in the body (15) of the intake manifold (1) which is connected to the water injection valve interface (8).

8. Intake manifold according to claim 7, **characterized in that** the second water conduit (10) is connected to an interface adapted to hold a water pump.

9. Intake manifold according to any of the preceding claims, **characterized in that** the intake manifold is made from at least two separate parts which are assembled to each other.

10. Internal combustion engine, **characterized in that** the internal combustion engine (31) comprises an intake manifold (1) according to any of claims 1 to 9.

11. Vehicle, wherein the vehicle (30) comprises an internal combustion engine (31) according to claim 10.
